# EUROPEAN PATENT APPLICATION

(11) **EP 2 615 705 A1**
(43) Date of publication of application: **17.07.2013**
(21) Application number: 12151242.0
(22) Date of filing: 16.01.2012
(51) Int. Cl.: H02B 13/035, H02B 3/00, H02B 5/06

(54) **Outdoor bushing for an electric switchgear installation**

(71) Applicant: ABB Technology AG, 8050 Zürich (CH)
(72) Inventor: Piazza, Costante, 26900 Lodi (IT); Cameroni, Roberto, 20100 Milano (IT); Gargioni, Vittorio, 26836 Montanaso Lombardo (LO) (IT)
(74) Representative: De Santis, Giovanni

(57) **Abstract**

Electric switchgear device comprising a casing housing one or more electrical devices, and at least one bushing which is operatively connected to the casing and houses a conductor suitable to allow an input or output electrical connection of the switchgear device, wherein the at least one bushing is operatively connected to the casing movably between at least two different positions.

## Description

The present disclosure relates to an electric switchgear device for high voltage applications, i.e. for applications with nominal voltages above 1kV.

The electric switchgear device of the present disclosure is particularly suitable to be implemented as a gas-insulated or hybrid switchgear device, e.g. of the type marketed by the ABB^{®} group under the commercial name of PASS, and it will be described by making reference to such a type of embodiment without intending in any way to limit its possible scope of applications also to different types of electrical switchgear or devices.

It is well known in the art that along the path of power grids there are provided various electrical devices, such as fault-protecting devices, monitoring devices et cetera; as a whole, such electrical devices, which are usually grouped into substations, are devoted to ensure that electric power is transmitted and distributed properly and correctly to loads and users, preventing the occurrence or intervening in case of electrical malfunctioning or faults. According to more traditional solutions, electric substations have been realized by using several components which are structurally independent and suitably connected to each other and to the power line when assembling in order to obtain the required layout and to perform each a respective dedicated function; these traditional solutions have presented some drawbacks in practical use, mainly due to the large number of components required, even for providing a minimal configuration, and to their structural and functional separation. Indeed, these aspects result in heavy maintenance requirements for each and any of the single components used, and to a considerable increase of the overall dimensions of the substation, with a consequent negative impact on installation and maintenance costs, as well as on environmental impact.

To overcome the above mentioned drawbacks, some compact and multifunctional switchgear devices have been designed, which integrate in a unique apparatus and are able to perform several electrical functions which, in the more traditional substations, were obtained by using multiple structurally separate elements.

Examples of such kind of multifunctional switchgear devices are disclosed in patents US5,796,060, EP1121739.

For example, such newer devices comprise a main casing which houses one or more electrical devices, e.g. a disconnector, a circuit breaker, current and/or voltage transformers, et cetera. On top of the casing there are mounted one or more bushings each containing a corresponding electric conductor so as to realize an input or output connection of the switchgear device with the external environment, e.g. a power line and/or other electrical devices of the substation. Although these newer devices have provided substantial benefits and improvements over the more traditional solutions, there is still need and room for further optimization in particular when facing with shipping issues, especially for road shipping.

Indeed, once a switchgear device is assembled into the manufacturing plant for example in order to proper test before shipping, then its total size and in particular its height is such that it may exceed the maximum standards for road shipping. As a matter of fact, it is often necessary to ship poles of the device separately, or to adopt shipping configurations rather complicated, or even to disassemble parts, e.g. the bushings from the casing, and to reassemble them at the installation site. This latter solution clearly entails additional problems, for instance re-conditioning and/or re-testing the equipment, especially if the switchgear device contains an insulating gas, or if air, dust, et cetera, penetrate inside it. Thus, it is desirable to provide a solution which faces these issues and allows further improvements over known devices.

This solution is provided by an electric switchgear device of the present disclosure comprising:
- a casing housing one or more electrical devices;
- at least one bushing which is operatively connected to said casing, said at least one bushing housing a conductor suitable to allow an input or output electrical connection of the switchgear device; characterized in that said at least one bushing is operatively connected to said casing movably between at least two different positions.

Further characteristics and advantages will become apparent from the description of some preferred but not exclusive exemplary embodiments of an electric switchgear device according to the present disclosure, illustrated only by way of non-limitative examples with the accompanying drawings, wherein:
figure 1 is a side view schematically illustrating an example of an electric switchgear device;
figure 2 is a side view showing an example of an electric switchgear device cut in order to show some exemplary internal electrical devices;
figures 3-5 are views showing exemplary three-pole electrical switchgear devices according to the present disclosure with their bushings in a first service position;
figures 6-8 illustrate the electrical switchgear devices of figures 3, 4 and 5, respectively, with their bushings in a second transport position;
figure 9 shows in detail some exemplary components used in an electric switchgear device according to the present disclosure;
figure 10 shows schematically a bushing of an electric switchgear device according to the present disclosure in a first service position;
figure 11 partially shows a bushing like the one of figure 10 while being rotated from a first service position towards a second transport position;
figure 12 shows the bushing of figure 10 in a second transport position;
figure 13 shows some exemplary components used in an electric switchgear device according to the present disclosure;
figure 14 is a cross-section showing some components of figure 13;
figures 15 and 16 show a modified embodiment of the components depicted in figure 13; figure 17 shows a portion of an electric switchgear device according to the present disclosure with components adapted for rotating a bushing around two different axes.

It should be noted that in the detailed description that follows, identical or similar components, either from a structural and/or functional point of view, have the same reference numerals, regardless of whether they are shown in different embodiments of the present disclosure; it should also be noted that in order to clearly and concisely describe the present disclosure, the drawings may not necessarily be to scale and certain features of the disclosure may be shown in somewhat schematic form.

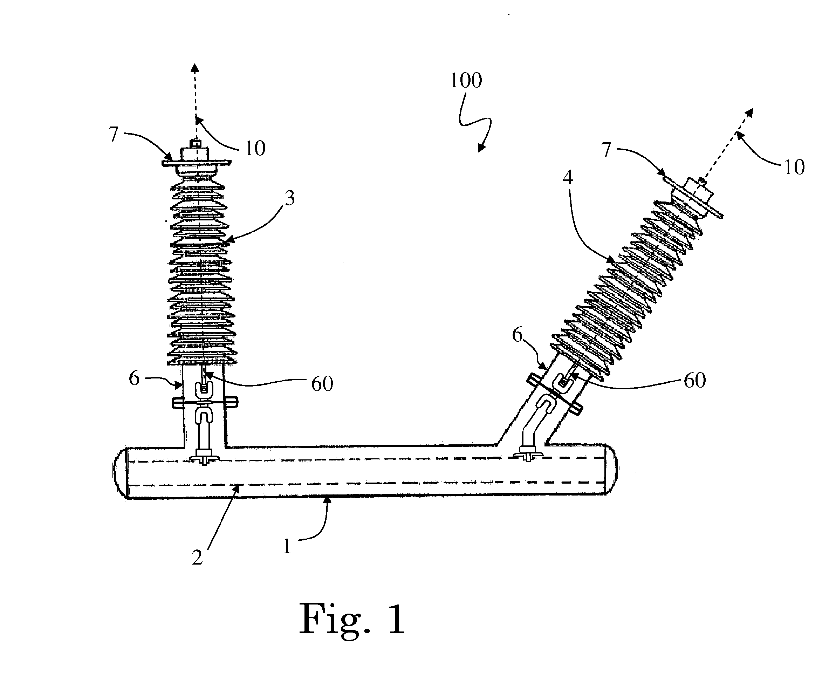

Figure 1 schematically represents an electric switchgear device 100 comprising a casing 1 which can have whatever suitable shape other than that illustrated in figure 1; the casing 1 is devised to house one or more electrical devices 2, e.g. current switching devices, such as circuit breakers or disconnectors, monitoring devices, for instance instruments transformers, et cetera.

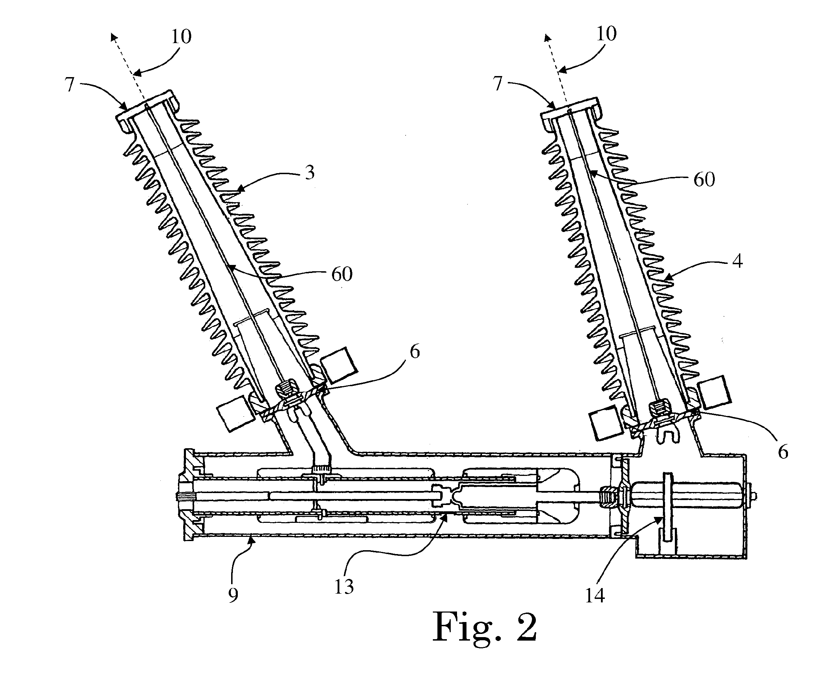

For instance, according to the example illustrated in figure 2, the casing 1 comprises a main portion 9 which can be partially or totally filled with an electric insulating gas and inside which there are positioned, a circuit breaker 13 and a disconnector/earthing unit 14.

Clearly, the casing 1 can be formed by just one single piece of whatever shape, e.g. the main portion 9 as in the example of figure 2, or it may comprise two or more pieces connected to each other; in addition, other components and electrical devices can be positioned inside the casing 1 according to various applications.

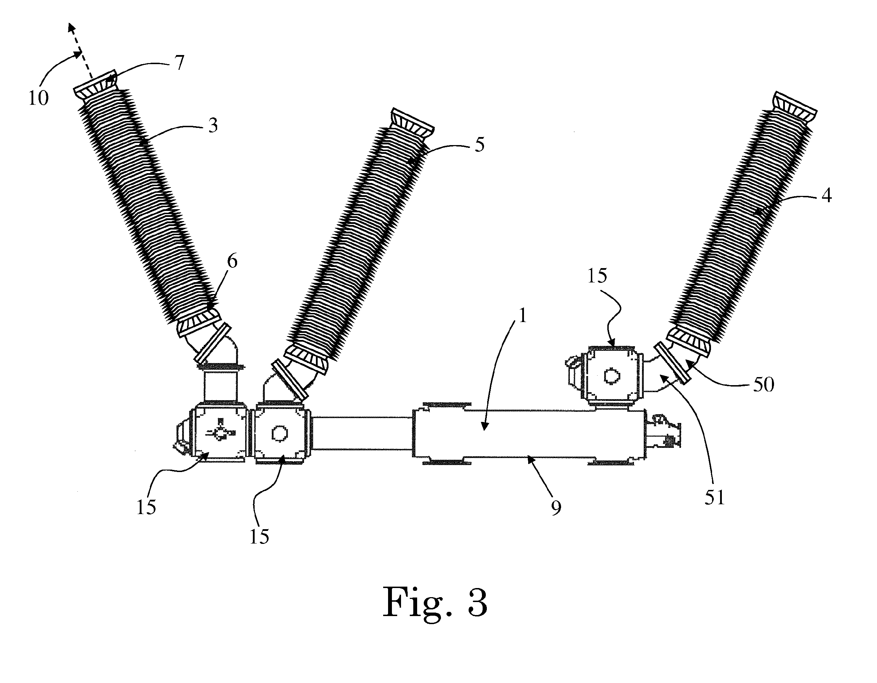

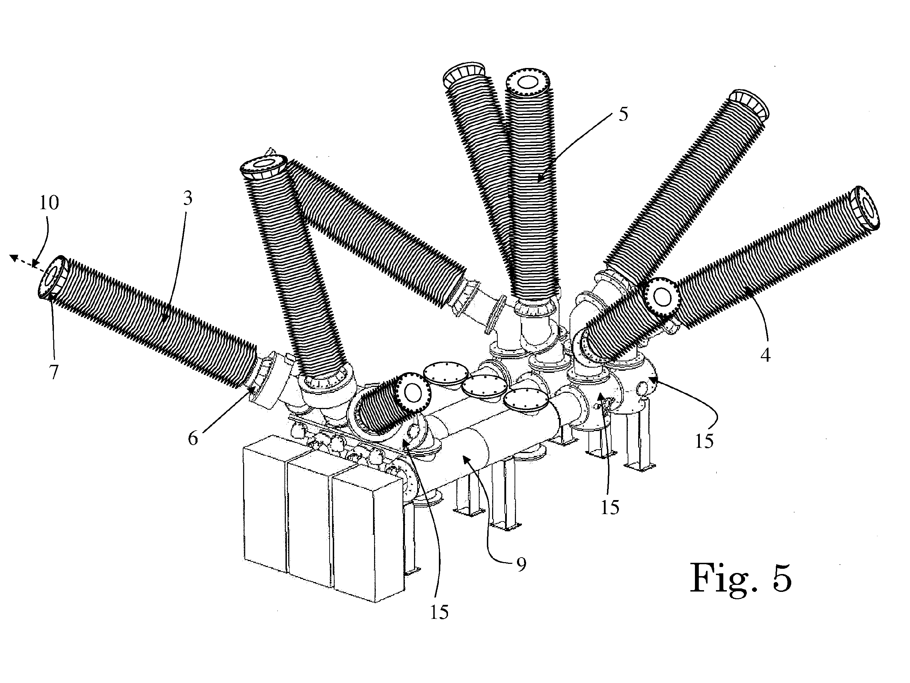

For instance, in the exemplary embodiments illustrated in figures 3-8, the casing 1 comprises the main portion 9 and some additional pieces 15 which are mechanically connected to the main portion 9 at different positions and are shaped to house corresponding electrical devices, e.g. instrument transformers, such as current or voltage transformers.

The shape, positioning, functioning, and mutual connection and/or inter-operation of the various electrical devices are not relevant for the understanding of the present disclosure and in any case are well known or readily available to those skilled in the art and therefore will not be described herein in details.

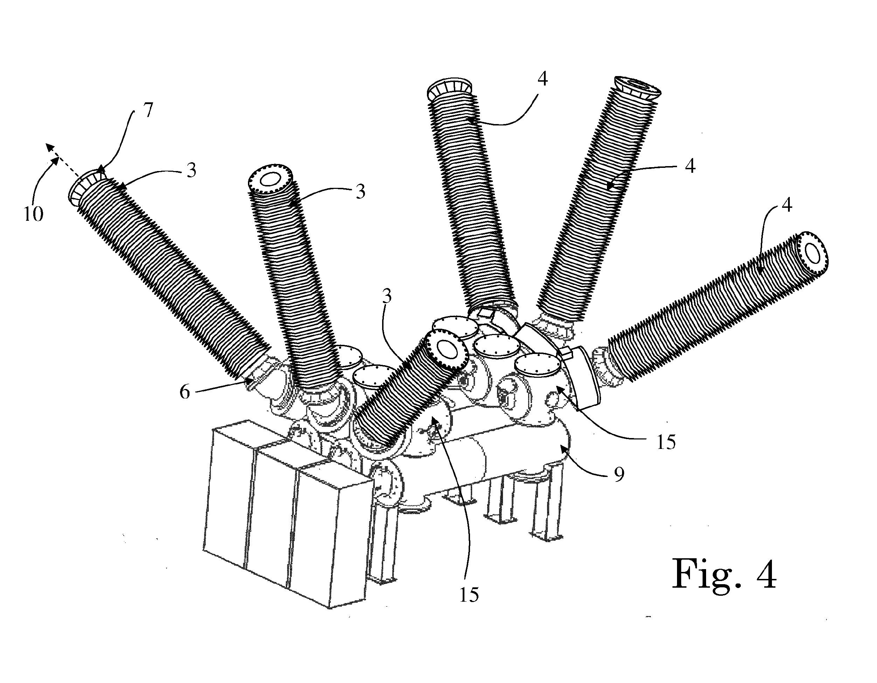

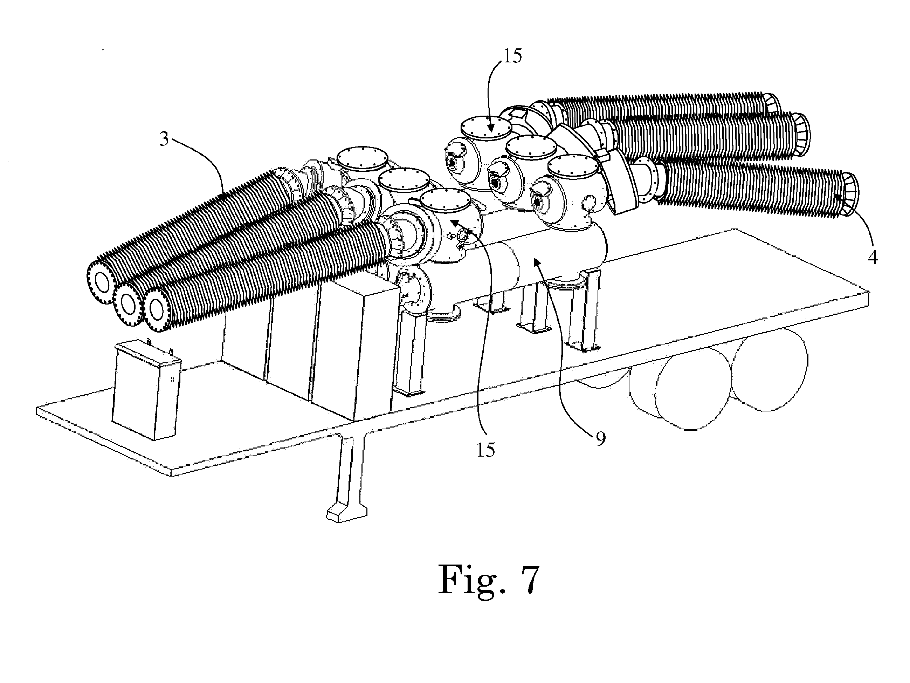

The electric switchgear device 100 according to the present disclosure further comprises (for each pole) one or more bushings which are operatively connected, typically mechanically, to the casing 1, above it with respect to a placing surface, e.g. the ground; for instance, in the exemplary embodiment illustrated in figures 4 and 7, for each pole there are two bushings 3 and 4, while in the exemplary embodiments of figures 3 and 6, and 5 and 8, there are three bushing 3, 4, 5, connected to a casing 1.

Clearly it is possible to have only one bushing as well as more than three.

For the sake of simplicity, in the following description reference will be made to just one of the bushings, e.g. the bushing 3 of one of the pole; it has to be understood that what described with reference to the bushing 3 can be applied likewise to any other bushing 4 and/or 5 of any pole.

Each bushing 3 (4, 5) usually houses a corresponding conductor 60, e.g. in the form of a rod, or a cable or a bar, which is suitable to allow an input/output electrical connection of the switchgear device 100, and in particular of one or more of the electrical devices positioned inside the casing 1, with an external electrical circuit or device, e.g. a power line and/or other components, such as power transformers, loads, et cetera.

According to well-known solutions, each bushing 3 (and/or 4, and/or 5) comprises a body extending along a longitudinal axis 10 with a first lower end portion 6 which is meant to be operatively connected to the casing 1 and a second tip portion 7, which is spaced apart from the first lower end portion 6, and from which a terminal for allowing input/output electrical connection protrudes out.

A bushing 3 can be connected to the casing 1 directly, e.g. there is not interposition of other connection pieces, as for example illustrated in figure 2, or there could be some additional connecting elements between the lower end portion 6 and the casing 1.

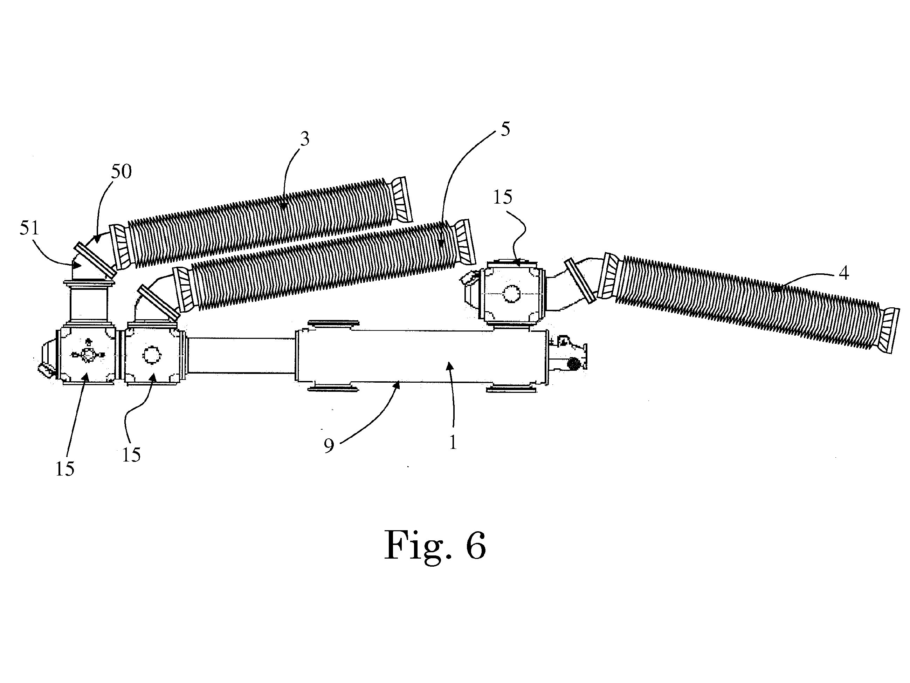

In the exemplary embodiments illustrated, two additional connecting elements 50, 51 are connected to each other and interposed between and operatively associated with the corresponding bushing 3 and the casing 1, respectively. In the embodiment illustrated such connection pieces 50, 51 are for example configured so as to form as a whole an elbow-shaped region between the bushing 3 and the casing 1. Clearly, these pieces may be differently shaped or connected; one or both pieces may be realized integral with the bushing 3 and the casing 1, respectively; or there might be one piece only or more than two pieces. Advantageously, at least one bushing, e.g. the bushing 3, is operatively connected to the casing 1 movably between at least two different positions while keeping it mechanically connected to the casing 1 itself; in particular, the at least one bushing is operatively connected to the casing 1 movably between a first service position wherein it is for example erected above the casing 1, as illustrated in figures 3-5, and a second transport or shipping position wherein the at least one bushing is lowered towards the casing 1 from the first service position (figures 6-8).

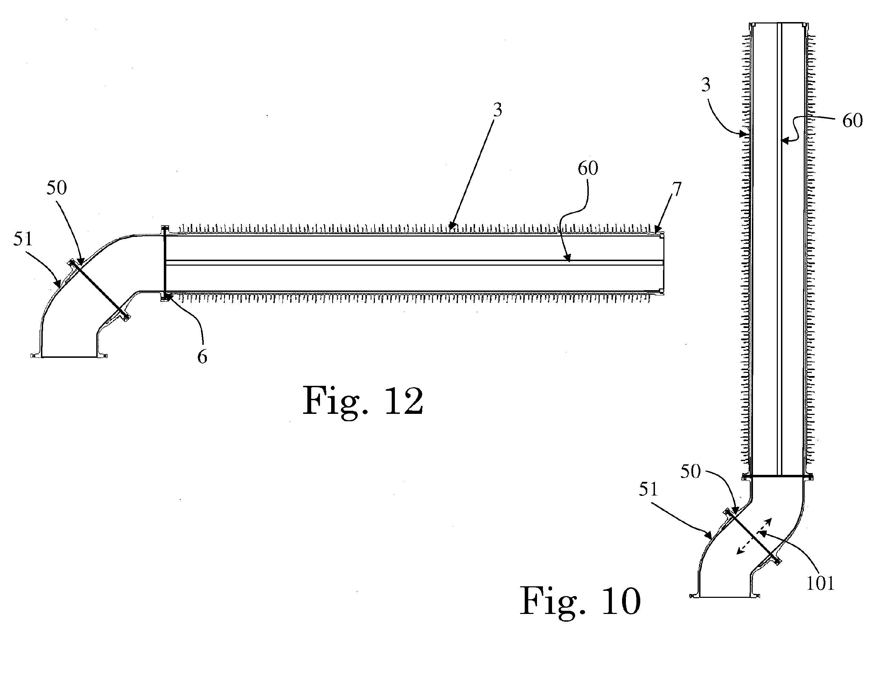

According to the exemplary embodiment illustrated in figures 3-8, the at least one bushing, e.g. the bushing 3, is operatively connected to the casing 1 rotatable around at least a first axis 101 (see for example figure 10).

In particular, the switchgear device 100 is provided with means for favoring the relative movement of the bushing 3 relative to the casing 1 or part thereof, which movement-favoring means are operatively associated directly or indirectly to at least one of the bushing 3 and/or the casing 1. With the definition of operatively associated directly or indirectly it has to be understood that the movement-favoring means are operatively associated to at least one surface which can be for example: a surface of a piece connected to the bushing 3 and solidly moving with it, or a surface integral with the bushing 3 itself; and/or it can be a surface of a piece connected to the casing 1 or integral with the casing itself.

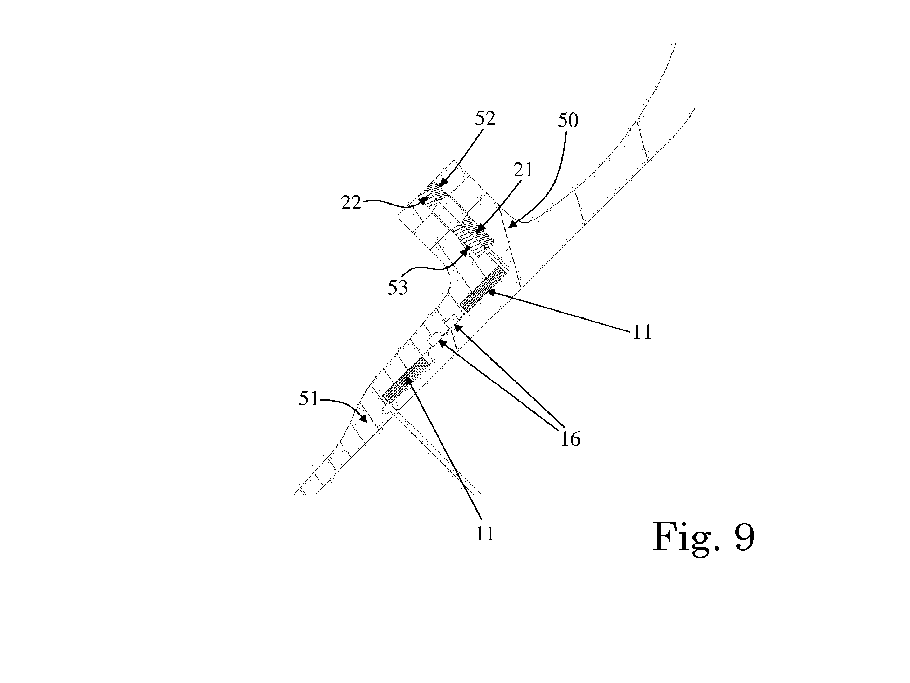

In the exemplary embodiment of figures 9-11, the switchgear device 100 comprises: first movement-favoring means operatively associated to the at least one bushing 3 and in particular to the connection piece 50 which is connected to the bushing 3 and moves solidly with it; and second movement-favoring means which are operatively associated to the casing 1 and in particular to the connection piece 51 which is solidly connected to the casing 1.

As illustrated in figure 9, the first movement-favoring means comprise a first ring 21 which is made for example of steel or aluminum coated with Teflon; the first ring 21 is positioned in a seat 52 provided at the lower external surface of the connection piece 50 which is mechanically connected to the lower end portion 6 of the bushing 3 and moves solidly with the bushing 3 itself.

The second movement-favoring means comprise a second ring 22 also made for instance of steel or aluminum coated with Teflon; the second ring 22 is positioned in a seat 53 provided at the upper external surface of the connection piece 51 which is solidly connected to the casing 1.

The two rings 21, 22 are positioned around the first rotation axis 101 facing to each other and in mutual surface contact.

Alternative positions of the rings 21 and 22 are possible depending on the fact that none, just one of or more than the two pieces 50, 51 are used. For example, the first ring 21 can be positioned in a recess provided directly at the external surface of the lower end portion 6 of the bushing 3 and the second ring 22 can be positioned in a recess provided directly at the external surface of the casing 1 if the casing 1 is directly connected to the lower end portion 6 of the bushing 3; or, if only the connection piece 51 is used and is connected to the casing 1, the second ring 22 can be positioned at the surface of the connection piece 50 meant to be connected to the bushing 3 so as to face with the first ring 21; et cetera.

According to the exemplary embodiment of figures 9-11 the switchgear device 100 further comprises one or more safety connection elements which are arranged to be connected to an outer part of the switchgear device 100 around the first rotation axis, e.g. the axis 101, at the region where the operative connection between a bushing 3 (or parts solidly connected and meant to solidly move therewith) and the casing 1 (or parts solidly connected therewith) is realized; such safety connection elements are arranged so as to allow the at least one bushing 3 to move between the before indicated two different positions while keeping the bushing itself safely mechanically connected to the casing 1.

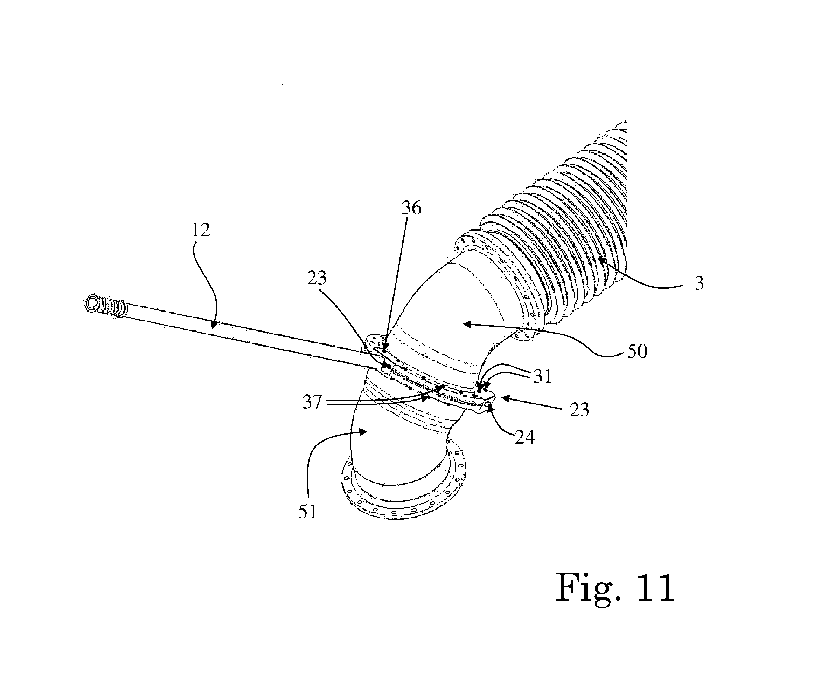

For instance, in the exemplary embodiment illustrated in figure 11, the one or more safety connection elements comprise each a C-shaped metallic clip or clamp 23 suitable to be releasable fastened to the outer part of the switchgear device 100, e.g. through screws 36 temporary screwed into holes 31; each metallic clip or clamp 23 is provided also with a recess 24 for receiving an actuating tool 12 of whichever suitable shape, e.g. a rod.

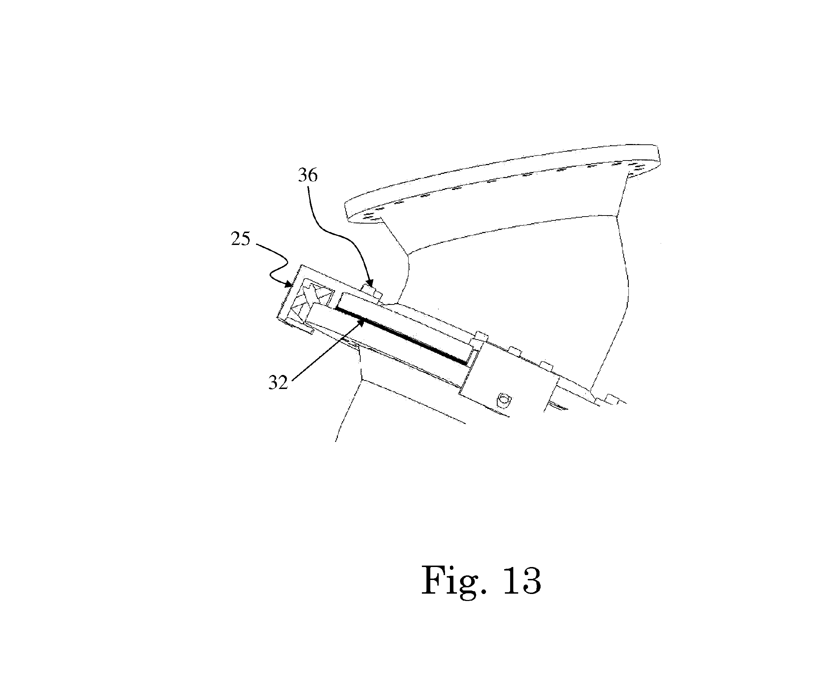

According to the exemplary embodiment illustrated in figures 13-14, the movement-favoring means comprise at least one layer 32, e.g. made of Teflon or steel/aluminum coated with Teflon, and in the exemplary form of a ring, which is positioned around the axis 101 between a first part 7 and a second part 8. Also in this case, the first part 7 can be integral with the bushing 3, or it can be associated operatively to the bushing 3, i.e. it is part for example of the connection piece 50 connected to and solidly moving with the bushing 3 itself; in turn, also the part 8 can be integral with the casing 1, or it can be part of a connection element, such as the connection element 51 solidly connected to the casing 1.

Also in the exemplary embodiment of figures 13-14 the switchgear device 100 comprises safety connection elements which are arranged to be connected to an outer part of the switchgear device 100 around the first axis 101 at the region where the operative connection between a bushing 3 (or parts solidly connected therewith) and the casing 1 (or parts solidly connected therewith) is realized; likewise, they allow the bushing 3 to move between the above indicated two different positions while keeping the bushing itself safely mechanically connected to the casing 1.

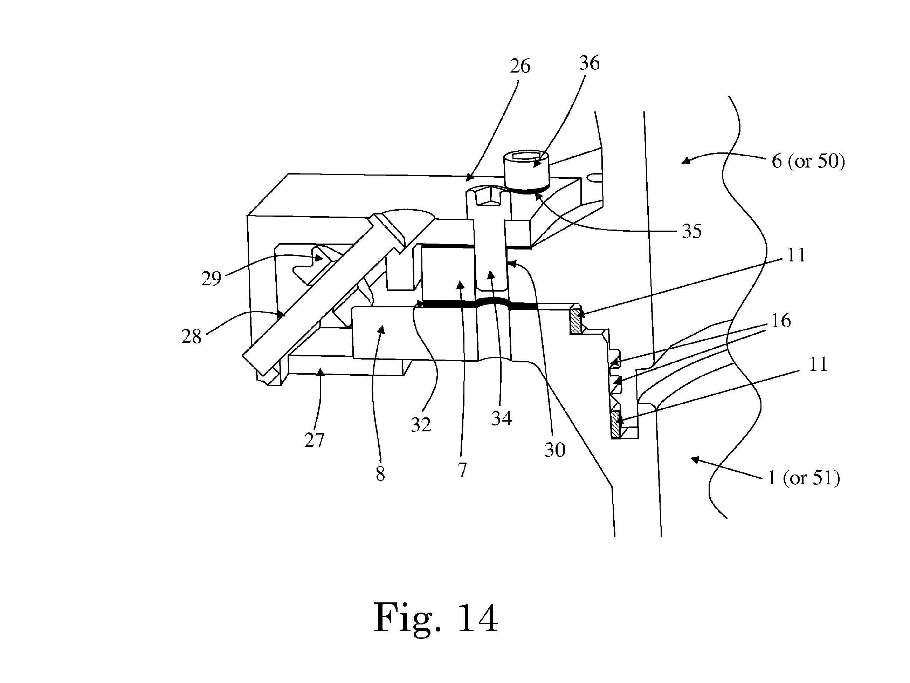

According to this exemplary embodiment, the safety connection means comprise each a shaped body 25 having: a first portion 26 suitable to interact with the first part 7 associated operatively to the bushing 3; and a second portion 27 which is spaced apart from the first portion 26 and is suitable to interact with a corresponding second part 8 operatively associated to the casing 1. A pin 28 runs, e.g. inclined, from the first portion 26 towards the second portion 27; a wheel-like element 29 is mounted pivotally around the pivot 28 and has an external contour which is shaped so as to geometrically mate with an associated external surface of the second part 8, as better visible in figure 14.

The shaped body 25 comprises also a hole 30 for receiving a tightening screw 34, one or more holes 35 for receiving temporary screws 36 and a recess (equivalent to recess 24) for receiving an actuating tool 12 (of whichever suitable shape).

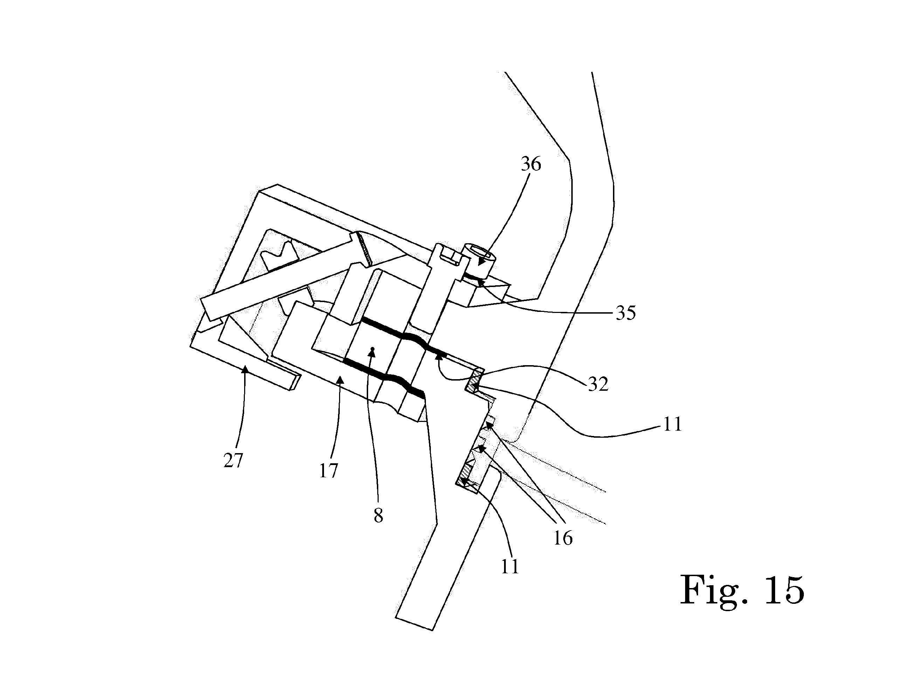

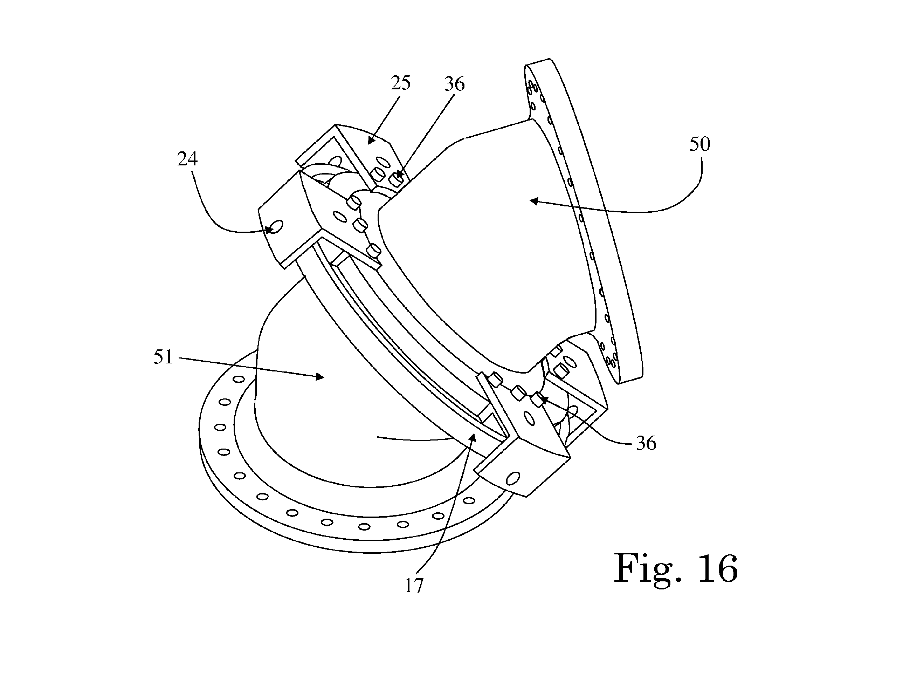

In the exemplary embodiment of figures 15-16, there is provided at least one additional guide 17, which can be formed by one single part or two or more parts associated to each other. The guide 17, which is for example in the shape of a ring or part of a ring, is interposed between the portion 8 and the second portion 27 and is meant to form a kind of rail for the wheel-like element 29.

In all the above exemplary embodiments, there is provided at least one protection guide 11, preferably two protection guides 11 which are positioned between two surfaces of the switchgear meant to move relative to each other, namely one surface solidly moving with the bushing 3, either because part of the bushing itself or solidly connected therewith, and the other surface solidly connected or part of the casing 1; in the exemplary embodiments illustrated, the protection guides 11 are in the form of rings positioned around the casing 1 or around a piece, e.g. the connection piece 51, solidly connected to the casing 1.

In case the switchgear device 100 is filled with an electrical insulating fluid, e.g. a gas, in order to prevent any leakage outside, there could be provided one or more sealing gaskets 16, which are preferably positioned between the two protection guides 11. For example such sealing gaskets may be constituted by O-rings which are positioned around the casing 1 or around a piece, e.g. the connection piece 51, solidly connected to the casing 1.

In practice, during assembly, for each pole, all bushings 3, 4, 5 are mechanically connected to the casing 1, directly or through the interposition of one or more interconnection elements. For instance, in the exemplary embodiments illustrated, the connection element 50 is mechanically connected (e.g. by means of screws) to and solidly moves with the corresponding bushing 3 and/or 4 and/or 5; the connection element 51 is mechanically solidly connected to the casing 1, e.g. by means of other screws; and the two pieces 50, 51 are interconnected to each other by means of screws 37 and/or bolts. In such a condition, the bushings 3, 4, 5 are all in the working or service position i.e. they are erected above the casing 1, as illustrated for example in figures 3-5 (tip portion 7 is spaced apart above the casing 1).

If the switchgear device has to be shipped, in particular by means of a truck, and if its size, especially its height, exceeds the allowed size, at each needed bushing (depending on the specific needs), e.g. the bushing 3, an operator may position (embodiment of figures 9-12) one or more clips 23 and releasably fasten them, e.g. by means of temporary screws 33, at one of the connection pieces 50 or 51, e.g. the connection piece 50; then the screws 37 connecting the two pieces 50-51 can be at least partially removed to temporarily release the mechanical connection realized by them, while the clips 23 keep the entire assembly mechanically connected and therefore maintain the relevant bushing 3 still operatively connected to the casing 1. A tool 12 can be inserted into the corresponding recess 24 of one of the clips 23 and then by exerting a force, the bushing 3 together with the parts solidly connected to it, in this case the piece 50, can be rotated around the axis 101 from the first service position illustrated in figures 3-5 and 10, towards the second transport position illustrated in figures 6-8 and 12. Such movement is favored by the ring 21 sliding over and relative to the ring 22.

In this position, as illustrated in figures 6-8, the tip portion 7 of the bushing 3 is lowered towards the casing 1 thus resulting in an overall size, and in particular a total height (measured in a vertical plan parallel to that of the drawing sheets) which is substantially reduced with respect to the first service position.

Likewise, according to the exemplary embodiment of figures 13-14, when and at each bushing needed, e.g. the bushing 3, an operator can position one or more shaped bodies 25 and releasable fasten them, e.g. by means of temporary screws 36, at one of the connection pieces 50 or 51, e.g. the connection piece 50, with the two portions 26-27 facing the two corresponding portions 7 and 8; then the screws 37 connecting the two pieces 50-51 can be at least partially removed to temporarily release the mechanical connection realized by them, while the bodies 25 keep the entire assembly mechanically connected and therefore maintain the relevant bushing 3 still operatively connected to the casing 1.

In this case, one or more tightening screws 34 are inserted each into a corresponding hole 30 and tightened thus causing the piece to which the portion 7 belongs to, e.g. the connection piece 50, to raise up and bringing the respective wheel-like element 29 to bear against the corresponding surface part 8 (or against the rail 27 when present); then a tool 12 can be inserted into the corresponding recess of one of the shaped bodies 25 and by exerting a force, the bushing 3 (together with the parts solidly connected to it) can be rotated around the axis 101 from the first service position illustrated in figures 3-5, towards the second transport position illustrated in figures 6-8. Such a movement is favored by the layer 32 interposed between the two pieces 50 and 51 and solidly connected to one of them, and by the wheel-like element 29 running along the mating border of the piece 8 (or along the rail 27).

Also in this case, as illustrated in figures 6-8, after moving, the tip portion 7 of the bushing 3, is lowered towards the casing 1 thus resulting in an overall size, and in particular a total height (measured in a vertical plan parallel to that of the drawing sheets) which is substantially reduced with respect to the first service position.

Clearly, what above described for the bushing 3 can be applied in the same way for one or more of the other bushings of any pole.

For shipping, the clips 23 or bodies 25 can be left in position or removed and the screws 37 screwed again.

Once the switchgear device 100 is at the installation site, the operation can be substantially reversed with the same elements and in the same way, bringing the bushing(s) 3 and/or 4 and/or 5 back to the first service position.

During the relative movements of the parts, the protection guides 11 also guide and favor the relative movement of the parts and in addition prevent that such movement may damage the sealing gaskets 16 when present.

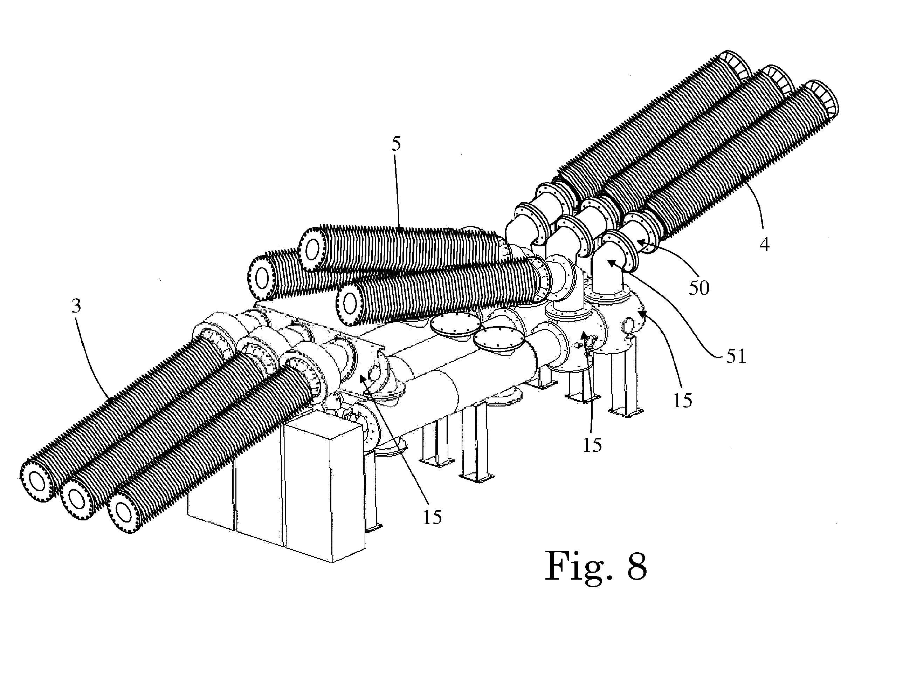

In practice, it has been found that the electric switchgear device according to the present disclosure gives some improvements over existing devices, allowing to overcome shipping issues previously mentioned, since it is made possible to at least temporarily reduce the size and in particular the height of the device while keeping the parts still mechanically connected to each other. This result is achieved according to a solution quite simple, flexible and easy to be implemented or modified to be tailored to different applications. For example, the bushings can be all rotated and lowered in the same direction (figure 6), or in directions opposite to each other (figure 7), or some bushings are moved in a direction and some other bushings in the opposite direction (figure 8).

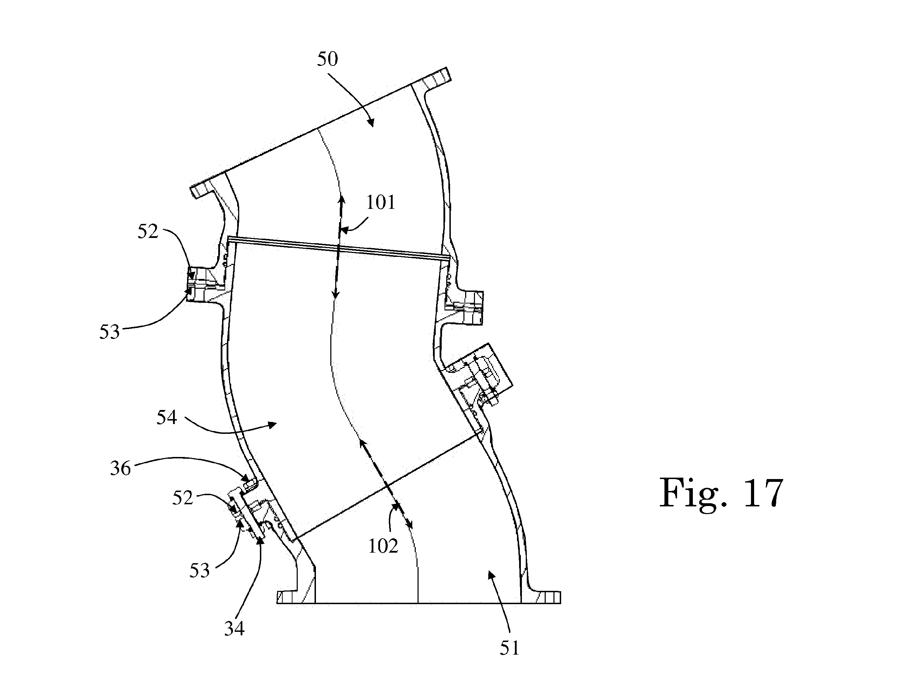

Further, if more and different movements are needed in order to bring the bushing(s) in an acceptable position, the solutions above described can be easily replicated or modified, for instance to allow a bushing rotating around a first axis 101 and around a different second axis, e.g. the axis 102. As illustrated for example in figure 17, it is possible for instance to introduce a further interconnection element 54 between the connection elements 50 and 51. The additional element 54 is connected to the element 50 and 51 respectively, for example by means of further screws and/or bolts; in case of shipping, then an operator can intervene and operate exactly as previously described by using the same components of the embodiments 9-12 (or 13-14) at the junction areas between the elements 54 and 50 and the elements 54 and 51, respectively. For example, an operator may first rotate the element 50 together with the associated bushing with respect to the elements 54-51 which remain still relative to the casing 1; and then rotating the elements 50 and 54 as a solid body together with the respective bushing around the axis 102 with respect to the element 51 solidly connected to the casing 1; (or vice-versa).

Clearly the above described operations for rotating the bushing(s) can be assisted or even completely realized by means of suitable mechanism, e.g. with motors, electrical devices, and/or transmission belts, et cetera.

The switchgear device according to the present disclosure is particularly suitable for use in an electrical substation either of the still type or of movable type, e.g. a substation which can be transported as a stand-alone unit; accordingly, the present disclosure also relates to a high voltage electric power distribution and/or transmission substation characterized in that it comprises a switchgear device as previously described and defined in the appended claims. The switchgear device thus conceived is susceptible of modifications and variations, all of which are within the scope of the inventive concept including any combination of the above described embodiments; all details may further be replaced with other technically equivalent elements. For example, it is possible to move a bushing together with the respective piece 15 (and also with all intermediary pieces there might be present in between) as a unique body relative to the casing 1, in which case the piece 15 can be considered as a piece operatively associated to and solidly moving with the respective bushing; or it is even possible to move together with a bushing (and again also with all intermediary pieces there might be present between the bushing and the casing 1) even a part of the main portion 9 of the casing 1 relative to the remaining portions of the casing 1 itself. There could be one single casing 1 housing all equipment of all poles, and on which all bushings of the various poles are mounted; the poles of the switchgear device can be of any number.

The clips 23 and/or the shaped bodies 25 may be differently shaped and/or positioned, and/or any suitable number of them can be used; the protection guides 11 may be in different number or positioned elsewhere, e.g. in recesses provided in the casing or at one of the connection elements, e.g. the connection element 51.

The number, and/or shape, and/or mutual positioning of the elements constituting the casing 1, and/or of the interconnection elements 50, 51, may be suitably varied according to the specific application; for instance, one or more of the pieces 50, 51 can realized integrally with a bushing or the casing, namely the connection element 50 can be constituted for instance by the same lower end portion 6 of the bushing suitably shaped. Different movements of the bushing(s) other than rotation(s) can be realized.

In practice, the materials, so long as they are compatible with the specific use, as well as the individual components, may be any according to the requirements and the state of the art. For example, a bushing can be realized with a tube of composite material, e.g. fiberglass with silicon sheds molded there on, or it may be realized by means of porcelain with fins made of glass, the rings 21, 22, and/or the layer(s) 32 may be realized with a different material, et cetera.

## Claims

1. An electric switchgear device (100) comprising:
- a casing (1) housing one or more electrical devices (2);
- at least one bushing (3, 4, 5) which is operatively connected to said casing (1), said at least one bushing (3, 4, 5) housing a conductor (60, 70) suitable to allow an input or output electrical connection of the switchgear device (100);
**characterized in that** said at least one bushing (3, 4, 5) is operatively connected to said casing (1) movably between at least two different positions.

2. An electric switchgear device (100) according to claim 1, wherein said at least one bushing (3, 4, 5) is operatively connected to said casing (1) movably between a first service position and a second transport position wherein it is lowered towards said casing (1) from said first service position.

3. An electric switchgear device (100) according to claim 1 or 2 wherein said at least one bushing (3, 4, 5) is operatively connected to said casing (1) rotatable around a first axis (101).

4. An electric switchgear device (100) according to one or more of the preceding claims, wherein said at least one bushing (3, 4, 5) is operatively connected to said casing (1) rotatable around two different axes (101, 102).

5. An electric switchgear device (100) according to one or more of the preceding claims, wherein it comprises means for favoring the relative movement of said at least one bushing (3, 4, 5) with respect to said casing (1) or part thereof, said movement-favoring means being operatively associated directly or indirectly to at least one of the bushing (3) and/or the casing (1).

6. An electric switchgear device (100) according to claim 5, wherein said movement favoring means comprises first means operatively associated to said at least one bushing (3) and second means operatively associated to said casing (1), said first and second means being arranged and cooperating mutually to allow said at least one bushing (3) moving between said two different positions relative to said casing (1) or part thereof.

7. An electric switchgear device (100) according to one or more of claims 5 and 6, wherein said first means comprise a first ring (21) and said second means comprise a second ring (22) which are positioned around said first axis (101) facing to each other and in mutual surface contact.

8. An electric switchgear device according to claim 5, wherein said movement-favoring means comprise a layer of Teflon interposed between a first surface operatively associated to said at least one bushing (3) and a second surface operatively associated to said casing (1).

9. An electric switchgear device according to one or more of the preceding claims wherein it comprises one or more safety connection elements arranged to be connected to an outer part of the switchgear device (100) and to allow said at least one bushing (3) moving between said two different positions while keeping it mechanically connected to said casing (1).

10. An electric switchgear device (100) according to claim 9, wherein said one or more safety connection elements comprise each a clamp (23) suitable to be releasable fastened to said outer part of the switchgear (100), said clamp (23) being provided with a recess (24) for receiving an actuating tool (12).

11. An electric switchgear device (100) according to claim 9, wherein said one or more safety connection elements comprise each a shaped body (25) suitable to be fastened to an outer part of the switchgear (100), said shaped body (25) comprising:
- a first portion (26) suitable to interact with a corresponding first part (7) associated operatively to said at least one bushing (3);
- a second portion spaced (27) spaced apart from said first portion (26) and suitable to interact with a corresponding second part (8) operatively associated to said casing (1);
- a pin (28) running from said first portion (26) towards said second portion (27).

12. An electric switchgear device (100) according to claim 11, wherein it comprises a wheel-like element (29) mounted pivotally around said pin (28) and whose external contour is shaped so as to geometrically mate with an associated external surface of said second part (8).

13. An electric switchgear device (100) according to claim 11, wherein shaped body (25) comprises a hole (30) for receiving a tightening screw (34) and a recess (24) for receiving an actuating tool (12).

14. An electric switchgear device (100) according to one or more of the preceding claims, wherein it comprises at least one sealing gasket (16) and at least one associated protection guide (11) which is positioned between a first surface operatively associated to and suitable to move solidly with said bushing (3) and a second surface operatively associated to said casing (1), said at least one protection guide (11) being suitable to guide said first surface when moving relative to the second surface and to protect said sealing gasket (11).

15. An electric substation **characterized in that** it comprises an electric switchgear device (100) according to one or more of the preceding claims.
